# EUROPEAN PATENT SPECIFICATION

(11) **EP 1 453 040 B1**
(45) Date of publication and mention of the grant of the patent: **01.08.2007**
(21) Application number: 04251038.8
(22) Date of filing: 25.02.2004
(51) Int. Cl.: G11B 7/24

(54) **Optical storage medium**
Optisches Speichermedium
Support d'enregistrement optique

(30) Priority: 26.02.2003 JP 2003048783
(43) Date of publication of application: 01.09.2004
(73) Proprietor: VICTOR COMPANY OF JAPAN, LTD., Yokohama-Shi, Kanagawa-Ken (JP)
(72) Inventor: Tabata, Hiroshi, Mito-shi, Ibaraki-ken (JP); Yonehara, Kazuo, Hitachinaka-shi, Ibaraki-ken (JP)
(74) Representative: Cross, Rupert Edward Blount

(56) References cited:
- EP-A- 1 148 485
- US-A1- 2002 160 305

## Description

### BACKGROUND OF THE INVENTION

The present invention relates to an optical storage medium for use in data recording, erasing and reproduction with optical irradiation. Particularly, this invention relates to an optical storage medium, such as a rewritable phase-change optical storage medium, like an optical disk and an optical card, that exhibits high recording characteristics in optical recording at high linear velocity.

Several types of known rewritable phase-change optical storage media are explained below.

Phase-change optical storage media are optical storage media that have a laminated structure in which, at least, a dielectric layer, a recording layer (or film), another dielectric layer, and a reflective layer are laminated in order on a substrate having a surface which is to be irradiated with laser beams having different powers in recording, erasing and recording.

In recording, laser pulses are applied (radiated) onto the recording layer to melt and then rapidly cool down the layer to form non-crystalline recorded marks thereon. The recorded marks exhibit lower reflectivity than those of crystalline phase, thus optically readable as recorded data.

In erasing of the recorded marks, a laser having a lower power than the recording laser pulses is radiated onto the recording layer to heat the layer to a crystallization temperature or higher but lower than a melting point of the layer. The temperature rise forces the recorded marks to change from the non-crystalline phase to the crystalline phase, thus erasing the recorded marks for overwriting.

Popular materials for such recording layers are Ge-Sb-Te alloy Ag-In-Sb-Te alloy etc., for their high crystallization speed.

Optical storage media having a recording layer of such material are usually provided with heat-resistant and permeable dielectric layers on both sides of the recording layer for protection of the recording layer against deformation or cracks.

A known rewritable phase-change optical storage medium having a dielectric layer including ZnS components is provided with an interface layer of nitride on one or each side of a recording layer to protect the recording layer against sulfur penetration.

Another known rewritable phase-change optical storage medium is provided with a metallic reflecting layer having Al, Ag, etc., as a major component on a dielectric layer, the opposite side to laser-incident side, for high reflectivity.

Recent phase-change optical storage media with high recording density require high recording speed. For example, recent rewritable phase-change optical storage media, such as DVD or DVD-RW, exhibit the maximum linear velocity of × 2. 4 DVD speed, however, take 25 minutes for recording per DVD. A practical recording time is 15 minutes or shorter. Thus, feasible maximum linear velocity is × 4 DVD speed or higher.

Recording at high linear velocity has been studied for high utility of optical disks. For example, recording linear velocity is 3. 5 m/s for × 1 speed according to the DVD standards.

Japanese Unexamined Patent Publications Nos. 5 (1993) - 16528 and 5 (1993) - 4453 disclose optical storage media employing Ge-Sb-Te alloy or Ge-Sb-Te-In alloy for a recording layer.

Experiments by the inventors of the present invention on optical storage media based on these Unexamined Patent Publications revealed low compatibility between DVD and DVD-RW, low reflectivity, among other things.

Japanese Patent No. 3150267 discloses an optical storage medium employing Ge(or Si)-Ag-In-Sb-Te alloy (Ge or Si being added to Ag-In-Sb-Te alloy) for a phase-change recording layer having a major composition expressed as [(AₐB_{b}C_{c})_{1-d}D_{d]1-e}Eₑ. The sign "A" indicates Ag and/or Au; "B" Sb and/or Bi; "C" Te and/or Se; "D" In, or In and Al and/or P; and "E" one or more of Si, Ge, Sn and P. The signs "a", "b", "c" and "d" indicate atomic ratios: 0. 001 ≤ a ≤ 0. 20; 0. 40 ≤ b ≤ 0. 90; 0. 10 ≤ c ≤ 0. 50 (a + b + c = 1); 0 ≤ d ≤ 0.06; and 0.001 ≤ e ≤ 0. 10.

The recording layer disclosed in the Japanese Patent includes at least one element selected from the group consisting of Ti, Zr, Hf, V, Nb, Ta, Mn, W and Mo. The elected element has an atom percent of 5% or less in the recording layer.

Experiments by the inventors of the present invention on the optical storage medium disclosed in this Japanese Patent achieved high linear velocity recording but only on a certain limited area of the composition of the recording layer. An embodiment of the Japanese Patent employs the composition [(AgₐSb_{b}Teₑ)_{1-d}In_{d}]₁₋ₑSiₑ (a = 0.123, b = 0.544, c = 0.333, d = 0.05, e = 0.017) for the recording layer. The optical storage medium including this composition allowed overwriting at the maximum linear velocity 12 m/s, not enough for recording at × 4 DVD speed or higher linear velocity of 14 m/s.

Japanese Unexamined Patent Publication No. 2002 - 264515 discloses an optical storage medium having a recording layer including major elements Ge, In, Sb and Te. These elements have composition ratios (atom %) α, β, y, and δ, respectively, where α + β + y + δ = 100 and O. 1 ≤ α ≤ 7, 1 ≤ β≤ 9, 61 ≤ γ ≤ 75, and 22 ≤ δ ≤ 30.

Experiments by the inventors of the present invention on the optical storage medium disclosed in this Unexamined Patent Publication achieved crystallization speed up to × 3 DVD speed, but not enough for recording at × 4 DVD speed or higher.

Japanese Unexamined Patent Publication No. 2000 - 313170 discloses an optical storage medium, recordable at a wide range of liner velocity, employing a recording layer expressed as [(SbₓTe₁₋ₓ)Ge_{1-y}]_{z}M_{1-z}, (0. 7 ≤ × ≤ 0.9, 0.8 ≤ y < 1, 0.88 ≤ z < 1, "M" being In and/orGa).

US 2002/0160 305 (cf. the preamble of claim 1) describes a recording layer in an optical recording medium having a composition of A_{z} G_{ey}(SbₓTe₁₋ₓ)_{1-y-z} with 0.75 ≤x ≤ 0.9, 0.01 ≤y ≤0.08, 0.03 ≤ y+z ≤ 0.10

EP1148485 describes an optical recording medium in which groove depths on one major surface are controlled in the range of 35 to 45nm.

Experiments by the inventors of the present invention on the optical storage medium disclosed in this Unexamined Japanese Patent Publication achieved high linear velocity recording but only on a certain limited area of the composition of the recording layer, or 0. 72 ≤ x ≤ 0. 74, but revealed a relatively low crystallization speed, not enough for recording at x 4 DVD speed or higher.

As discussed above, the known rewritable phase-change optical storage media cannot exhibit feasible recording characteristics at high linear velocity such as × 4 DVD speed or higher. In detail, the known storage media exhibit low reflectivity or low crystallization speed for the recording layers to form amorphous (non-crystalline) sections in crystallized sections on the recording layer in high-linear-velocity recording.

### SUMMARY OF THE INVENTION

The present invention provides an optical disk according to claim 1 that exhibits feasible recording characteristics at high linear velocity such as × 4 DVD speed or higher, and unsusceptible to multiple overwriting.

The present invention provides an optical disk including a substrate a first protective layer formed on the substrate, a recording layer formed on the first protective layer, a second protective layer formed on the recording layer, and a reflective layer formed on the second protective layer, wherein the recording layer includes a composition expressed as (SbₓTe₁-ₓ)ₐGe_{b}ln_{c} in which atomic ratios are 0. 77 ≤ x ≤ 0. 84, 0. 85 ≤ a ≤ 0. 95, 0. 01 ≤ b ≤ 0. 10 and 0.01 ≤ c ≤ 0. 10 where a + b + c = 1.

### BRIEF DESCRIPTION OF DRAWINGS

FIG. 1 is a fragmentary enlarged vertical longitudinal sectional view of an embodiment of an optical disk according to the present invention;
FIG. 2 is an illustration of recording strategy of modulation of laser pulses;
FIG. 3 is an illustration of signal waves recorded at 6 x speed;
FIG. 4 is an illustration of calculation of modulated amplitude;
FIG. 5 is a table of recording characteristics of examples of the present invention and comparative samples;
FIG. 6 is a graph indicating modulated amplitude and reflectivity versus groove depth in substrate; and
FIG. 7 is an illustration of a known recording strategy.

### DETAILED DESCRIPTION OF EMBODIMENT

An embodiment according to the present invention will be disclosed with reference to the attached drawings.

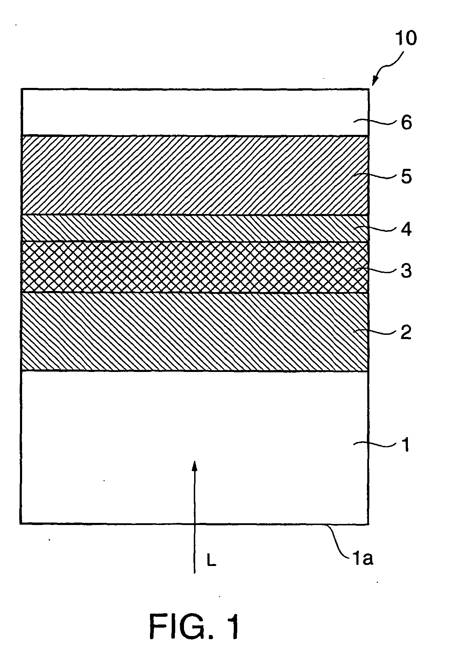

As illustrated in FIG. 1, an optical disk 10 according to the present invention has a laminated structure in which at least a first protective layer 2, a recording layer 3, a second protective layer 4, and a reflective layer 5 are laminated on a substrate 1 in this order. A third protective layer 6 may be provided on the reflective layer 5.

The recording layer 3 includes a composition expressed as (SbₓTe₁₋ₓ}ₐGe_{b}In_{c}. The signs "x", "a", "b" and "c" indicate atomic ratios: 0. 77 ≤ x ≤ 0. 84; 0.85 ≤ a ≤ 0. 95; 0. 01 ≤ b ≤ 0. 10; and 0. 01 ≤ c ≤ 0. 10 (a + b + c = 1), and - 0. 05 ≤ b - c ≤ 0. 05 for combination of Ge and In.

The recording layer 3 includes at least one element selected from the group consisting of Ag, Si, Al, Ti, Bi and Ga. This selected element has 3 atom % or less in the recording layer 3.

The reflective layer 5 includes Ag as a major component. The substrate 1 has a spiral groove or concentric grooves with a depth d_{g} of 20 nm ≤ d_{g} ≤ 30 nm.

The optical disk 10 according to the present invention can be used as a phase-change optical disk such as DVD-RW, and a rewritable medium on which data can be overwritten several times.

The following disclosure is made for DVD-RW to which the optical disk 10 according to the present invention is applied.

The substrate 1 is made of transparent material unsusceptible to dust, cracks, etc., in recording with a laser beam L incident to a substrate surface 1a, as shown in FIG. 1. Such transparent material is glass, polycarbonate resin, polymethyl, methacrylate resin, polyolefin resin, epoxy resin, polyimide resin, etc. Among these materials, polycarbonate resin is the best choice for its low birefringence and hygroscopicity, and also pliability.

The feasible thickness of the substrate 1 is in the range from 0. 01 mm to 5 mm. A thickness of 0. 6 mm is feasible for DVD-RW (having 1. 2 mm as the entire thickness). A thickness thinner than 0. 01 mm is susceptible to dust even in recording with a focused laser beam incident to the substrate surface 1 a. A thickness thicker than 5 mm makes harder to giver high numerical aperture to an objective lens, which causes large laser-beam spot size to lower recording density.

The substrate 1 may be a flexible or a rigid substrate. A flexible substrate is used for tape-, sheet- or card-type storage media. A rigid substrate is used for card- or disk-type storage media.

Two substrate 1 may be prepared after the first protective layer 2, the recording layer 3, the second protective layer 4, the reflective layer 5 and the third protective layer 6 are laminated on each substrate. The two substrates may be attached to each other on their back sides to be formed into an air-sandwich structure, an air-incident structure or a tight-adhesion structure.

The first and second protective layers 2 and 4 protect the substrate 1 and the recording layer 3 from heat that could otherwise cause deformation to lower recording characteristics and also serve to enhance signal contrast in reproduction by optical interferences.

The first and second protective layers 2 and 4 are transparent to laser beams in recording and reproduction, each having a refraction index "n", 1. 9 ≤ n ≤ 2. 3. These protective layers may not necessarily be made of the same material or composition. A composite film of ZnS and SiO₂ is the best choice for these protective layers for high recording sensitivity, high C/N, high eraseability, etc., against repeated recording and erasing.

The first protective layer 2 has a thickness in the range from about 5 to 500 nm. Nevertheless, the feasible range is 40 to 300 nm against cracks and peeling-off from the substrate 1 or the recording layer 3.

The feasible range of thickness for the second protective layer 4 is 0. 5 to 50 nm for high recording characteristics such as high C/N, high eraseability, etc., and also stable multiple overwriting.

The material of the reflective layer 5 includes metal, such as Al, Au or Ag, exhibiting optical reflectivity or an alloy of any of these metals, as a major component, and an additional element composed of one or more of metal or semiconductor. Or, it may include a mixture of Al, Au or Ag, and metal nitride, metal oxide or metal chalcogenide having Al or Si.

Metal, such as Al, Au or Ag, and an alloy of any of these metals as a major component are feasible as the material of the reflective layer 5 for high optical reflectivity and also high thermal conductivity.

A recommended alloy is made up of Al and at least one element selected from the group consisting of Si, Mg, Cu, Pd, Ti, Cr, Hf, Ta, Nb, Mn, Zr, etc. Another recommended alloy is made up of Au or Ag, and at least one element selected from the group consisting of Cr, Ag, Cu, Pd, Pt, Ni, Nd, etc. These alloys exhibit high anti-environmental characteristics against high temperature, high humidity, etc. The best choice for high-linear-velocity recording is metal or alloy, including Ag, as a major component, exhibiting an optical constant having a small real part.

The feasible thickness of the reflective layer 5 is in the range from 50 to 300 nm, depending on thermal conductivity of metal or alloy used for this layer. The thickness of 50 nm or more gives no change in optical factors such as reflectivity whereas large effects to cooling speed. The thickness beyond 300 nm lowers production efficiency due to long time to produce such a thick layer. Thus, the thickness must be adjusted within the above feasible range by using material of high thermal reflectivity under consideration of cooling speed.

Any layer, such as the second protective layer 4, that touches the reflective layer 5 is preferably made of a material that does not include sulfur (S) when the latter layer is made of a material including pure silver (Ag) or an alloy of silver. This is because lamination of a sulfur-included layer and the protective layer 5 made of a material including pure silver or an alloy of silver could suffer defects caused by production of AgS compound due to diffusion of sulfur from the former layer to the latter layer after long storage.

The recording layer 3 (one of the features of the present invention) is an alloy layer of Ge - In - Sb - Te alloy or Ge - In - Sb - Te alloy with Ag or at least one element selected from the group consisting of Si, Al, Ti, Bi and Ga. The feasible thickness of the recording layer 3 is in the range from 10 to 25 nm for low laser power in recording. The thickness below 10 nm makes the recording layer 3 hard to crystallize whereas beyond 25 nm requires high laser power in recording.

An interface layer may be provided on one or each side of the recording layer 3. One requirement for the interface layer is that it includes no sulfur components, which could otherwise penetrate into the recording layer 3 due to repeated overwriting, thus lowering recording, erasing characteristics, etc.

It is preferable for the interface layer to include at least one material among nitride, oxide and carbide. Recommended materials are germanium nitride, silicon nitride, aluminum nitride, aluminum oxide, zirconia oxide, chromic oxide, silicon carbide and carbon. At least one of them is preferably used as the material of the interface layer. Oxygen, nitrogen, hydrogen, etc., may be added to these materials. The nitride, oxide and carbide may be deviated from the stoichiometric composition. In other words, nitrogen, oxygen or carbon may be excess or short in the material, which could enhance the interface layer so that it is hardly peeled off, thus preferable for long storage.

The second protective layer 4 is preferably made of a compound of ZnS and SiO₂ A diffusion protective layer may be provided between the second protective layer 4 and the reflective layer 5 when the layer 5 includes Ag or an alloy of Ag. It restricts decrease in reflectivity of the reflective layer 5, which could otherwise occur due to reaction of sulfur (S) included in the second protective layer 4 and silver (Ag) in the reflective layer 5, thus producing an AgS compound.

One requirement for the diffusion protective layer is, like the interface layer, that it includes no sulfur components. It is preferable for the diffusion protective layer to include at least one material among nitride, oxide and carbide. Recommended materials are germanium nitride, silicon nitride, aluminum nitride, aluminum oxide, zirconia oxide, chromic oxide, silicon carbide and carbon. At least one of them is preferably used as the material of the diffusion protective layer. Oxygen, nitrogen, hydrogen, etc., may be added to these materials. The nitride, oxide and carbide may be deviated from the stoichiometric composition. In other words, nitrogen, oxygen or carbon may be excess or short in the material.

The light source to be used in recoding of the optical storage medium according to the present invention may be a laser beam or strobe light of high optical intensity. A recommended light source is a semiconductor laser for its compactness, low power consumption and easiness in modulation.

In recording, the recording layer 3 is exposed to laser pulses while it is in a crystalline phase so that amorphous-phase recorded marks are formed thereon. Conversely, crystalline-phase recorded marks may be formed on the recording layer 3 while the layer is in an amorphous phase.

In erasing, amorphous-phase recorded marks are exposed to a laser beam so that they are converted into a crystalline phase, or crystalline-phase recorded marks are exposed to a laser beam so that they are converted into an amorphous phase.

Recommended for recorded marks is an amorphous phase which is available for high-speed recording and hardly causes deformation of the recording layer 3.

Recommended for laser beams are high optical intensity in forming recorded marks whereas relatively weak in erasing, and one-beam overwriting for rewriting by one-time beam radiation that requires a short rewriting time.

Disclosed next is a method of producing the optical storage medium according to the present invention.

Lamination of the first protective layer 2, the recording layer 3, the second protective layer 4, and the reflective layer 5 (and also the third protective layer 6) on the substrate 1 may be performed by a known vacuum thin-film forming technique, such as, vacuum evaporation (resistive heating or electron-beam evaporation), ion plating or sputtering (DC, AC or reactive sputtering). The most feasible is sputtering for easy adjustments to composition and film thickness.

Production is preferably performed with a vacuum film-forming apparatus (batch process for simultaneously forming multiple numbers of substrates 1 in a vacuum chamber or single-disk process for forming substrates 1 one by one).

Film-thickness adjustments to the first and second protective layers 2 and 4 (and the third protective layer 6), the recording layer 3 and the reflective layer 5 may be performed by control of power of sputter power supply and period of turning on the power supply or monitoring the progress of deposition of each layer by a quartz crystal film-thickness monitor.

These layers may be formed on the substrate 1 while the substrate is fixed, being transferred or rotating. It is preferable to rotate the substrate 1 on its axis and more preferably with orbital motion for higher uniformity of film thickness. The substrate 1 is preferably cooled to restrict warping.

These layers may be coated with a dielectric layer of ZnS or SiO₂ or resin protective layer including ultraviolet curing resin. After the layers are formed (and further coated with the dielectric layer or the resin protective layer), two substrates 1 may be stuck to each other with an adhesive, etc.

The recording layer 3 is preferably exposed to a laser beam or a xenon electronic-flash lamp for crystallization before recording.

Discussed next is comparison between examples 1 to 12 (phase-change optical storage media) of the optical storage medium according to the present invention and comparative samples 1 to 9 of phase-change optical storage media.

Recording was conducted to the embodiments according to the following specifications:

One-beam overwriting: a disk drive tester (DDU1000, PULSETEC CO.) equipped with a laser diode having a wavelength of 650 nm and an optical lens having NA = 0. 60

Recording linear velocity: 14 m/s (corresponding to x 4 DVD speed) and 21 m/s (corresponding to x 6 DVD speed) with 8 - 16 modulation random pattern

Clock period T: 9. 6 ns for 14 m/s, 6. 3 ns for 21 m/s

Bit length: 0. 267 µm/bit

Recording was conducted ten times (overwriting) to a target track and adjacent tracks at the same density as DVD-ROM with capacity of 4.7 Gbytes. Signals were reproduced, at a constant power of 0. 7 mW (reproduction power Pr), and sliced at the center of the signal levels for measurements of clock to data jitter at 7. 0 m/s (linear velocity) by a reproducer (LM220A, SHIBASOKU CO.).

In detail, recording was conducted with the sequence of pulses divided according to the following recording strategy (pulse pattern):

In forming a recorded mark having a length of nT (T being a clock time at a given lineary volocity), pulses were divided under a rule: m = (n - k)/2, k = 3 (n being an odd number) or k = 4 (n being an even number). The pulses were modulated with laser power at three levels: recording power Pw, erasing power Pe and bias power Pb (Pw > Pe > Pb). Laser modulation was conducted in the order of AₜT, BₜT, A₁T, B₁T, ..., AₘT, BₘT, and CT, at AₜT, A₁T, ..., and AₘT for constant-intensity period for the recording power Pw, and BtT, B₁T, ..., BₘT, and CT for constant-intensity period for the bias power Pb, where Aₜ₃ + Bₜ₃ = A_{tod} + B_{tod} = Aₘ + Bₘ = 2T and Aₜ₄ + Bₜ₄ = Atev + Bₜₑᵥ = 3T, with At₃, At₄, A_{tod}, and Aₜₑᵥ for At at n = 3, 4, n ≥ 5 (an odd number), n ≥ 6 (an even number), and Bₜ₃, Bₜ₄, B_{tod}, and Bₜₑᵥ for Bₜ at n = 3, 4, n ≥ 5 (an odd number), n ≥ 6 (an even number).

These recording specifications sufficiently gave rapid-cooling history to the optical storage media exhibiting high crystallization speed, thus successfully restricting recrystallization of recorded marks.

The results achieved adjustments to thickness and length of recorded marks at desired levels, which gave sufficient signal levels.

It is found that Aₜ varied with n = 3, 4, n ≥ 5 (an odd number), n ≥ 6 (an even number) and divided into parameters Aₜ₃ (n = 3), Aₜ₄ (n = 4), A_{tod} (n ≥ 5 and Aₜₑᵥ (n ≥ 6) gives high signal characteristics.

Quantitative analysis of the compositions of the recording layer 3 was conducted using an X-ray fluorescence spectrometer (SRS303, SIEMENCE CO.)

### [Example 1]

Each layer shown in FIG. 1 was provided on the substrate 1 made of polycarbonate resin having a diameter of 120 mm and a thickness of 0. 6 mm. Formed on the substrate 1 were grooves having a track pitch of 0. 74 µm and a depth of 25 nm, with a ratio of groove width to land width of roughly 40 : 60.

A vacuum thin-film forming chamber was vacuumed to 3 x 10⁻⁴ Pa. The chamber was filled with Ar gas of 2 x 10⁻¹ Pa, and ZnS including 20mol%-SiO₂ was applied onto the substrate 1 to form the first protective layer 2 having a thickness of 60 nm by high-frequency magnetron sputtering.

The recording layer 3 having a thickness of 16 nm {composition ratio: Ge₂In₅Sb₇₆Te₁₇, x = 0. 817 (a ratio of Sb to Te)} was formed on the first protective layer 2 by cosputtering from a 3-element single-alloy target of Ge, Sb and Te and another 3-element single-alloy target of In, Sb and Te.

Laminated on the recording layer 3 were the second protective layer 4, having a thickness of 16 nm, made of the same material as the first protective layer 2, and the reflective layer 5, having a thickness of 120 nm, from a Ag-Pd-Cu target.

The substrate 1 having the laminated layers was taken out from the vacuum chamber. An acrylic ultraviolet curing resin (SK51110 SONY CHEMICAL CO.) was coated on the reflective layer 5 by spin coating. The resin was exposed to ultraviolet rays so that it was hardened to form the third protective layer 6, having a thickness of 3 µm, on the reflective layer 5.

Another substrate 1 was prepared with the same process as disclosed above. The two substrates 1 were stuck to each other with an adhesive sheet, thus a double-sided optical disk was produced.

The double-sided optical disk was exposed to a laser having a wide beam, a width of which in a direction of tracks on the disk being wider than another width of which in a direction of radius of the disk, so that it was heated to a crystallization temperature or higher for initialization.

Recording was conducted to guide grooves of the phase-change recording layer 3 from the substrate side. The grooves had a convex shape when viewed from the direction of an incident laser beam.

The recording strategy was as follows:

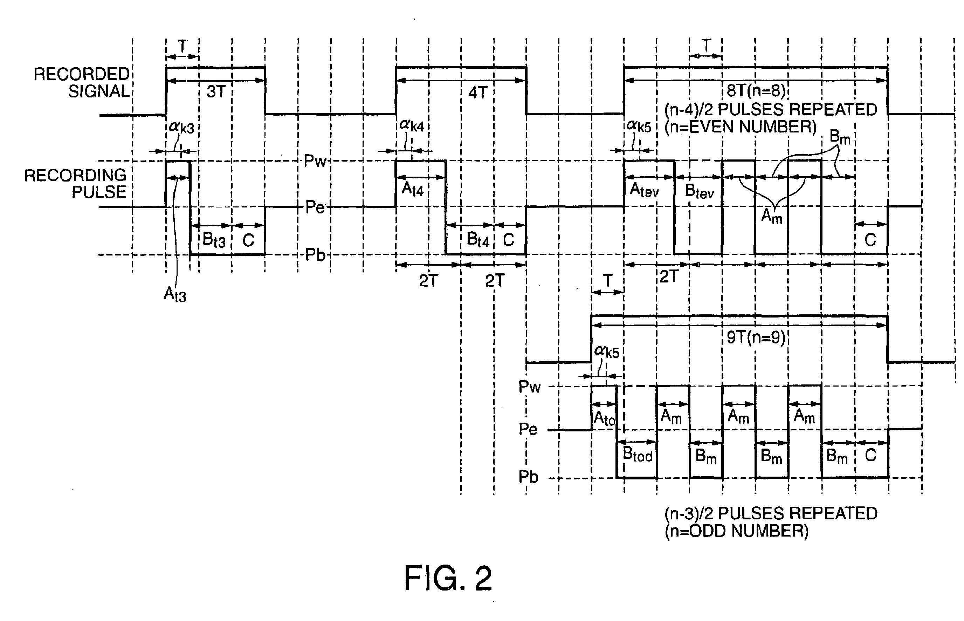

Width of each pulse (FIG 2): Aₜ₃ = 0. 95 [T], A_{tod} = 0. 75 [T], Aₜ₄= Atev =1.10 [T], Aₘ = 0. 95 [T], and C = 1. 00 [T] at liner velocity of 14 m/s (corresponding to x 4 speed); Aₜ₃= 0. 80 [T], A_{tod}= 0. 95 [T], Aₜ₄= Aₜₑᵥ= 1. 50 [T], Aₘ = 0. 90 [T], and C = 0. 50 [T] at liner velocity of 21 m/s (corresponding to x 6 speed)

Clock time T: 9. 6 ns at x 4 speed, 6. 3 ns at x 6 speed

Delay time α₃₁ (T) of top pulse Aₜ for mark length 3T, 4T and 5T and more, following to 3T space: =α₃₄ = 0. 1, and α₃₅ = 0. 2, respectively

Delay time α₄₁ (T) of top pulse Tₜ for mark length 3T, 4T and 5T and more, following to 4T space: α₄₃ =α₄₄ = 0. 2, and α₄₅ = 0. 3, respectively

Delay time α₅₁ (T) of top pulse Tₜ for mark length 3T, 4T and 5T and more, following to 5T space or more: α₅₃ = α₅₄ = 0. 3, and α₅₅ = 0. 4, respectively

Overwriting was conducted ten times to a target track and adjacent tracks at x 4 and x 6 speed according to the following strategy:.

Recording power Pw/erasing power Pe: 18. 0/9.0 mW at x 4 speed, 22. 5/10. 5 mW at x 6 speed

Bottom power Pb: 0. 5 mW at x 4 and x 6 speed

Measurements were conducted for signals reproduced from the optical disk (example 1) on clock to data jitter and signal level (modulated amplitude).

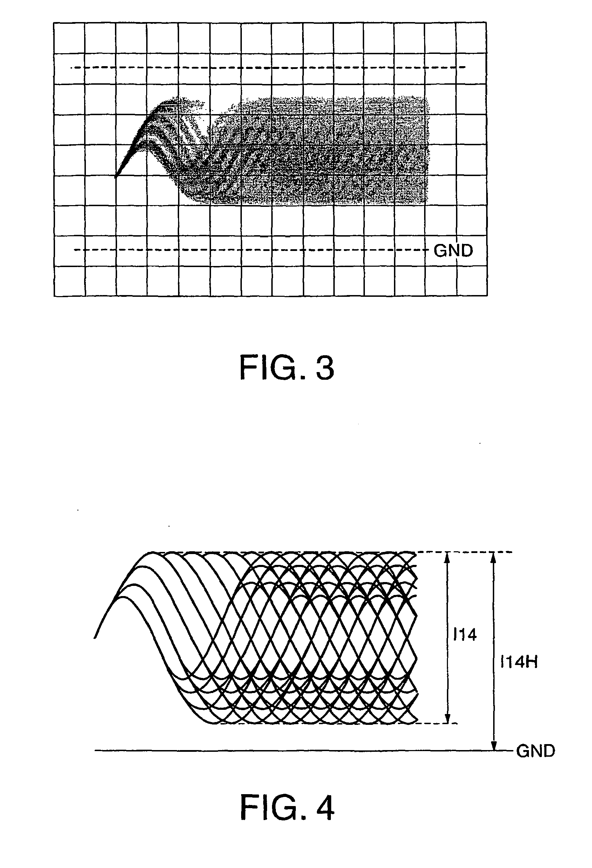

The example 1 exhibited feasible characteristics: jitter 8. 3% and 9. 9% at x 4 and x 6 speed, respectively; and modulated amplitude 72% and 67% at x 4 and x 6 speed, respectively. Shown in FIG. 3 is an eye pattern given at x 6 speed recording. Shown in FIG. 4 is a modulated amplitude given by |14/ |14H x 100.

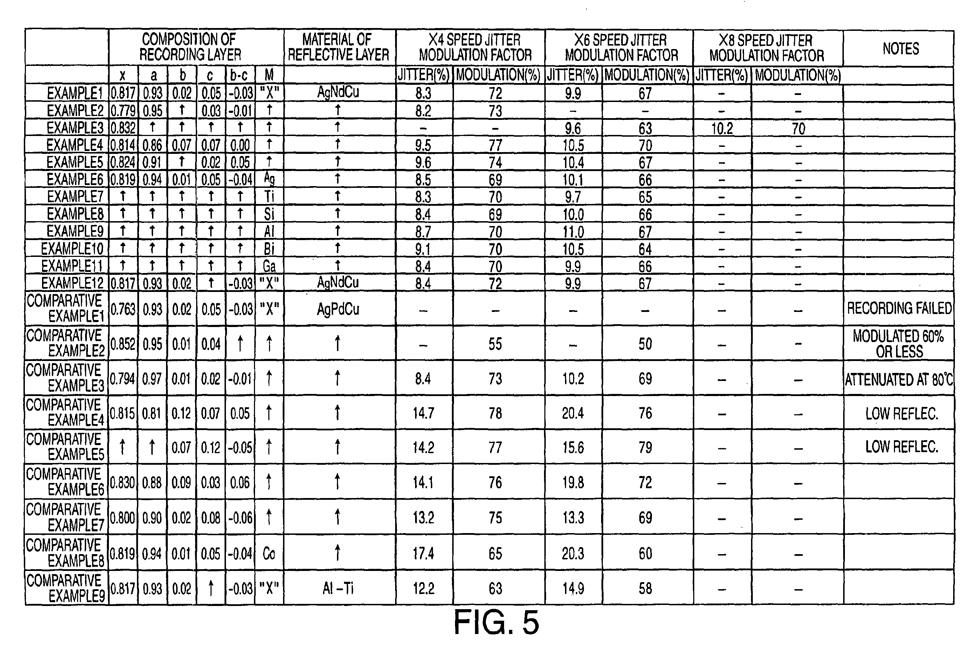

The recording characteristics of the example 1 and other examples, and also comparative samples are shown in FIG.5.

### [Example 2]

The example 2 of the optical disk was produced in the same way as the example 1 except that the recording layer 3 (composition ratio: Ge₂In₃Sb₇₄Te₂₁, x = 0. 779) was formed by cosputtering from a 3-element single-alloy target of In, Sb and Te, and another target of Ge.

Recording was conducted at x 4 speed according to the recording strategy of pulse width (FIG. 2): Aₜ₃ = 1. 10 [T], Aₜ₄ = 1. 50 [T], A_{tod}= 1. 00 [T], Atev = 1. 50 [T], Aₘ = 1. 00 [T], and C = 0. 30 [T].

The example 2 exhibited almost the same characteristics as the example 1 as shown in FIG. 5 under the measurements conducted on x 4 speed recording in the same way as the example 1.

### [Example 3]

The example 3 of the optical disk was produced in the same way as the example 1 except that the recording layer 3 (composition ratio: Ge₂In₃Sb₇₉Te₁₆, x = 0. 832) was formed by cosputtering from a 3-element single-alloy target of In, Sb and Te, and another 2-element single-alloy target of Ge and Sb.

Recording was conducted at x 6 speed according to the recording strategy of pulse width (FIG. 2): Aₜ₃ = 0. 80 [T], Aₜ₄ = 1. 00 [T], A_{tod}= 0. 65 [T], Atev = 1. 00 [T], Aₘ = 0. 80 [T], and C = 1. 50 [T].

The example 3 exhibited almost the same characteristics as the example 1 as shown in FIG. 5 under the measurements conducted on x 6 speed recording in the same way as the example 1.

Further recording was conducted at a linear velocity of 28 m/s (x 8 speed) according to the recording strategy of pulse width (FIG. 2): Aₜ₃ = 1. 00 [T], Atod = 1. 00 [T], At4 = Atev = 1. 80 [T], Am = 1. 00 [T], and C = 0. 30 [T].

Overwriting was conducted ten times to a target track and adjacent tracks at x 8 speed according to the following strategy:.

Recording power Pw/erasing power Pe: 26. 0/12.0 mW

Bottom power Pb: 0. 5 mW

Measurements were conducted on the example 3 in the same way as the example 1. The example 3 exhibited feasible characteristics: clock to data jitter 10. 2%; and modulated amplitude 62%, as shown in FIG. 5.

### [Example 4]

The example 4 of the optical disk was produced in the same way as the example 1 except that the recording layer 3 (composition ratio: Ge₇ln₇Sb₇₀Te₁₆, x = 0. 814) was formed by cosputtering from a 3-element single-alloy target of In, Sb and Te, and another target of Ge.

Recording was conducted at x 4 and x 6 speed according to the same recording strategy as the example 1.

The example 4 exhibited almost the same characteristics as the example 1 at x 4 and x 6 speed recording as shown in FIG. 5 under the same measurements as the example 1.

### [Example 5]

The example 5 of the optical disk was produced in the same way as the example 1 except that the recording layer 3 (composition ratio: Ge₇In₂Sb₇₅Te₁₆, x = 0. 824) was formed by cosputtering from a 3-element single-alloy target of In, Sb and Te, and another target of Ge.

Recording was conducted at x 4 and x 6 speed according to the same recording strategy as the example 1.

The example 5 exhibited almost the same characteristics as the example 1 at x 4 and x 6 speed recording as shown in FIG. 5 under the same measurements as the example 1.

### [Example 6]

The example 6 of the optical disk was produced in the same way as the example 1 except that the recording layer 3 {composition ratio: Ge₁In₅Sb₇₇Te₁₇ (x = 0. 819 ) + Ag 1%} was formed by cosputtering from a 4-element single-alloy target of Ge, In, Sb and Te, and another target of Ag.

Recording was conducted at x 4 and x 6 speed according to the same recording strategy as the example 1.

The example 6 exhibited almost the same characteristics as the example 1 at x 4 and x 6 speed recording as shown in FIG. 5 under the same measurements as the example 1.

### [Example 7]

The example 7 of the optical disk was produced in the same way as the example 1 except that the recording layer 3 {composition ratio: Ge₁In₅Sb₇₇Te₁₇ (x = 0. 819 ) + Ti 1%} was formed by cosputtering from a 4-element single-alloy target of Ge, In, Sb and Te, and another target of Ti.

Recording was conducted at x 4 and x 6 speed according to the same recording strategy as the example 1.

The example 7 exhibited almost the same characteristics as the example 1 at x 4 and x 6 speed recording as shown in FIG. 5 under the same measurements as the example 1.

### [Example 8]

The example 8 of the optical disk was produced in the same way as the example 1 except that the recording layer 3 {composition ratio: Ge₁In₅Sb₇₇Te₁₇ (x = 0. 819 ) + Si 1%} was formed by cosputtering from a 4-element single-alloy target of Ge, In, Sb and Te, and another target of Si.

Recording was conducted at x 4 and x 6 speed according to the same recording strategy as the example 1.

The example 8 exhibited almost the same characteristics as the example 1 at × 4 and x 6 speed recording as shown in FIG. 5 under the same measurements as the example 1.

### [Example 9]

The example 9 of the optical disk was produced in the same way as the example 1 except that the recording layer 3 {composition ratio: Ge₁In₅Sb₇₇Te₁₇ (x = 0. 819 ) + Al 1%} was formed by cosputtering from a 4-element single-alloy target of Ge, In, Sb and Te, and another target of Al.

Recording was conducted at x 4 and x 6 speed according to the same recording strategy as the example 1.

The example 9 exhibited almost the same characteristics as the example 1 at x 4 and x 6 speed recording as shown in FIG. 5 under the same measurements as the example 1.

### [Example 10]

The example 10 of the optical disk was produced in the same way as the example 1 except that the recording layer 3 {composition ratio: Ge₁ln₅Sb₇₇Te₁₇ (x = 0. 819 ) + Bi 2%} was formed by cosputtering from a 4-element single-alloy target of Ge, In, Sb and Te, and another target of Bi.

Recording was conducted at × 4 and x 6 speed according to the same recording strategy as the example 1.

The example 10 exhibited almost the same characteristics as the example 1 at x 4 and x 6 speed recording as shown in FIG. 5 under the same measurements as the example 1.

### [Example 11]

The example 11 of the optical disk was produced in the same way as the example 1 except that the recording layer 3 {composition ratio: Ge₁InₛSb₇₇Te₁₇ (x = 0. 819 ) + Ga 2%} was formed by cosputtering from a 4-element single-alloy target of Ge, In, Sb and Te, and another target of Ga.

Recording was conducted at x 4 and x 6 speed according to the same recording strategy as the example 1.

The example 11 exhibited almost the same characteristics as the example 1 at x 4 and x 6 speed recording as shown in FIG. 5 under the same measurements as the example 1.

### [Example 12]

The example 12 of the optical disk was produced in the same way as the example 1 except that the reflective layer 5 was formed by sputtering using Ag-Nd-Cu alloy.

Recording was conducted at x 4 and x 6 speed according to the same recording strategy as the example 1.

The example 12 exhibited almost the same characteristics as the example 1 at x 4 and x 6 speed recording as shown in FIG. 5 under the same measurements as the example 1.

### [Comparative Sample ]

The comparative sample 1 of the optical disk was produced in the same way as the example 1 of the present invention except that the recording layer 3 (composition ratio: Ge₂In₅Sb₇₁Te₂₂, x = 0. 763) was formed by cosputtering from a 3-element single-alloy target of Ge, Sb and Te, and another 3-element single-alloy target of In, Sb and Te.

Recording was failed on the sample 1 at x 4 speed and higher such that a portion of a recorded mark was formed on a space section of the sample 1 due to low crystallization speed, as shown in FIG. 5.

### [Comparative Sample 2]

The comparative sample 2 of the optical disk was produced in the same way as the example 1 of the present invention except that the recording layer 3 (composition ratio: Ge₁In₄Sb₈₁Te₁₄, x = 0. 852) was formed by cosputtering from a 3-element single-alloy target of Ge, Sb and Te, and another 3-element single-alloy target of In, Sb and Te.

Recording was failed on the sample 2 at x 4 and x 6 speed such that modulated amplitudes were below 60% (DVD-RW standards) at both speeds, as shown in FIG. 5.

### [Comparative Sample 3]

The comparative sample 3 of the optical disk was produced in the same way as the example 1 of the present invention except that the recording layer 3 (composition ratio: Ge₁In₂Sb₇₇Te₂₀, x = 0. 794) was formed by cosputtering from a 3-element single-alloy target of Ge, Sb and Te, and another target of Ge.

Recording was failed on the sample 3 at x 4 and x 6 speed such that amorphous marks were crystallized in 80°C-storage characteristics for a signal reproduced after the sample 3 had been stored at 80° C and 85% for 96 hours, which caused decrease in modulated amplitude whereas clock to data jitters were 8. 4% and 10. 2% at x 4 and x 6 speed, respectively, favorable like the examples of the present invention though, as shown in FIG. 5.

### [Comparative Sample 4]

The comparative sample 4 of the optical disk was produced in the same way as the example 1 of the present invention except that the recording layer 3 (composition ratio: Ge₁₂In₇Sb₆₆Te₁₅, x = 0. 815) was formed by cosputtering from a 3-element single-alloy target of Sb and Te, and another target of Ge.

Recording was failed on the sample 4 at x 4 and x 6 speed such that clock to data jitters were 14. 7% and 20. 4% at x 4 and x 6 speed, respectively, larger than those of the examples 1 to 11 of the present invention, with unfavorable reflectivity lower than 18% (DVD-RW standards), as shown in FIG. 5.

### [Comparative Sample 5]

The comparative sample 5 of the optical disk was produced in the same way as the example 1 of the present invention except that the recording layer 3 (composition ratio: Ge₇In₁₂Sb₆₆Te₁₅, x = 0. 815) was formed by cosputtering from a 3-element single-alloy target of Ge, Sb and Te, and another target of In.

Recording was failed on the sample 5 at x 4 and x 6 speed such that clock to data jitters were 14. 2% and 15. 6% at x 4 and x 6 speed, respectively, larger than those of the examples 1 to 11 of the present invention, with unfavorable reflectivity lower than 18% (DVD-RW standards), as shown in FIG. 5.

### [Comparative Sample 6]

The comparative sample 6 of the optical disk was produced in the same way as the example 1 of the present invention except that the recording layer 3 (composition ratio: Ge₉In₃Sb₇₃Te₁₅, x = 0. 830) was formed by cosputtering from a 3-element single-alloy target of Ge, Sb and Te, and another target of Ge.

Recording was failed on the sample 6 at x 4 and x 6 speed such that clock to data jitters were 14. 1% and 19. 8% at x 4 and x 6 speed, respectively, larger than those of the examples 1 to 11 of the present invention, as shown in FIG. 5.

### [Comparative Sample 7]

The comparative sample 7 of the optical disk was produced in the same way as the example 1 of the present invention except that the recording layer 3 (composition ratio: Ge₂In₈Sb₇₂Te₁₈, x = O. 800) was formed by cosputtering from a 3-element single-alloy target of Ge, Sb and Te, and another target of In.

Recording was failed on the sample 7 at x 4 and x 6 speed such that clock to data jitters were 13. 2% and 13. 3% at x 4 and x 6 speed, respectively, larger than those of the examples 1 to 11 of the present invention, as shown in FIG. 5.

### [Comparative Sample 8]

The comparative sample 8 of the optical disk was produced in the same way as the example 1 of the present invention except that the recording layer 3 (composition ratio: Ge₁InₛSb₇₇Te₁₇. x = 0. 819) was formed by cosputtering from a 3-element single-alloy target of Ge, In, Sb and Te, and another target of Co.

Recording was failed on the sample 8 at x 4 and x 6 speed such that clock to data jitters were 17. 4% and 20. 3% at x 4 and x 6 speed, respectively, larger than those of the examples 1 to 11 of the present invention, as shown in FIG. 5.

### [Comparative Sample 9]

The comparative sample 9 of the optical disk was produced in the same way as the example 1 of the present invention except that the reflective layer 5 having a thickness of 170 nm was formed by sputtering using Al-Ti alloy.

Recording was failed on the sample 9 at x 4 and x 6 speed such that clock to data jitters were 12. 2% and 14. 9% at x 4 and x 6 speed, respectively, larger than those of the examples 1 to 12 of the present invention, as shown in FIG. 5.

As discussed above, the ratio "x" of Sb to Te beyond 0. 84, such as in the comparative sample 2, could not achieve feasible modulation at 4 x and 6 x speed. It is speculated that the higher the ratio of Sb, the more the recording layer is easily crystallized, which provides poor modulated amplitude.

In contrast, the ratio "x" of Sb to Te below 0. 77, such as in the comparative sample 1, lowed the crystallization speed to form a portion of a recorded mark on a space section of the sample storage medium at 4 x speed or higher.

The comparison between the several examples according to the present invention and the comparative samples reveals that the examples of the present invention having the recording layer composed of (SbₓTe₁₋ₓ)ₐGe_{b}In_{c} in which the ratio "x" of Sb to Te is 0. 77 ≤ x ≤ 0. 84 provide feasible modulated amplitudes at 1 x to 3 x speed and also at 4 x and 6 x speed, without forming a portion of a recorded mark on a space section of the exemplary storage media.

In addition, the ratio a" of Sb to Te beyond 0. 95, such as in the comparative sample 3, exhibited poor storage characteristics at 80°C to cause signal attenuation. This is because the crystallization temperature was lowered as the ratio of Sb to Te became higher, which caused crystallization of amorphous sections (recorded marks) on which signals had been recorded, during test storage. In contrast, the ratio "a" below 0. 85, such as in the comparative samples 4 and 5, caused deviation of optical constant from a feasible range to lower reflectivity of the disk.

It is further revealed that the examples of the present invention having the recording layer composed of (SbₓTe₁₋ₓ)ₐGe_{b}In_{c} in which the ratio "a" of Sb to Te is 0. 85 ≤ a ≤ 0. 95 exhibit high crystallization temperatures so that recorded marks on which signals are recorded cannot be crystallized at 1 x to 3 x speed and also 4 x and 6 x speed. Furthermore, these examples have high percentage of added elements which do not cause deviation of optical constant from a feasible range, thus not lowering reflectivity.

The ratio "b" of Ge beyond 0. 1, such as the comparative sample 4, caused much jitters and lowered reflectivity of the disk. It is speculated that high percentage of Ge produced crystal particles of large diameter to lower accuracy of the amorphous marks, thus causing much jitters. The ratio "b" below 0. 01 is also not feasible because low percentage of Ge cannot exhibit its high anti-environmental characteristics against high temperature, high humidity, etc..

It is thus further revealed that the examples of the present invention having the recording layer composed of (SbₓTe₁₋ₓ)ₐGe_{b}In_{c} in which the ratio "b" of Ge is 0. 01 ≤ a ≤ 0. 10 do not produce crystal particles of large diameter which otherwise lower accuracy of the amorphous marks, thus not causing much jitters, at 1 x to 3 x speed and also 4 x and 6 x speed. There examples further exhibit high anti-environmental characteristics against high temperature, high humidity, etc..

Like the ratio "b", the ratio "c" of In beyond 0. 1, such as the comparative sample 5, caused much jitters and lowered reflectivity of the disk. It is speculated that high percentage of In produced clusters which caused much jitters. The ratio "c" below 0. 01 is also not feasible because low percentage of In inevitably increases Ge to achieve high anti-environmental characteristics.

it is thus further revealed that the examples of the present invention having the recording layer composed of (SbₓTe₁₋ₓ)ₐGe_{b}In_{c} in which the ratio "c" of In is 0. 01 ≤ a ≤ 0. 10 do not lower reflectivity of the disk, thus not causing much jitters, at 1 x to 3 x speed and also 4 x and 6 x speed. There examples do not require high percentage of Ge to achieve high anti-environmental characteristics.

As discussed, it is revealed that higher percentage of Ge or In causes much jitters. Also revealed is that the difference in percentage between Ge and In beyond 0. 06, such as the comparative samples 6 and 7, causes much jitters even if the percentage of Ge and In is adequate, respectively. It has not been explained though.

It is thus further revealed that the examples of the present invention having the recording layer composed of (SbₓTe₁₋ₓ)ₐGe_{b}In_{c}, in which difference in ratio between "b" of Ge and "c" of In is - 0. 05 ≤ b - c ≤ 0. 05, suppress much jitters than out of this range, at 1 x to 3 x speed and also 4 x and 6 x speed.

It is further revealed that the examples of the present invention having the recording layer composed of (SbₓTe₁₋ₓ)ₐGe_{b}In_{c}, in which difference in ratio between "b" of Ge and "c" of In is - 0. 05 ≤ b - c ≤ 0. 05, with at least one element M (FIG. 5) among Ag, Si, Al, Ti, Bi and Ga exhibit high overwrite characteristics. Nonetheless, the ratio of the element M has to be 3 atom % or less which could otherwise cause much jitters to lower overwrite characteristics. Addition of another element, such as Co (comparative sample 8) as the element M lowered recording characteristics. In FIG. 5, the sign "X" in the column "M" means no addition of the element M.

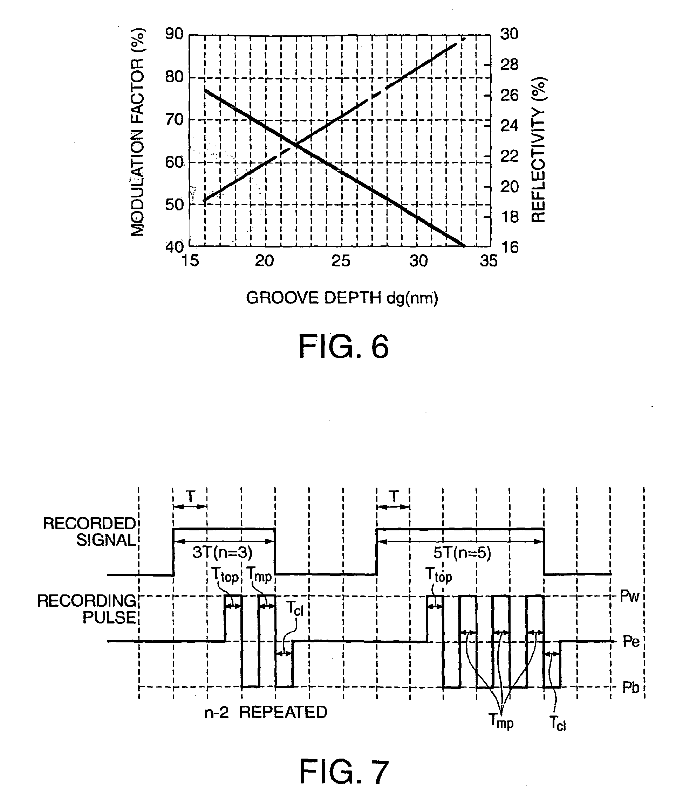

Moreover, it is revealed that a feasible groove depth in the substrate 1 lies in the range from 20 to 30 nm for a laser beam having a wavelength of about 660 nm in recording. FIG. 6 shows the groove depth " dg " shallower than 20 nm gives lower modulated amplitude (dot line) whereas that deeper than 30 nm gives lower reflectivity (solid line) to the recording layer.

The embodiment according to the present invention employs the material Ag - Pd - Cu or Ag - Nd - Cu (Ag being the measure component in either material) for the reflective layer to offer high modulated amplitude, such as shown in the examples 1 and 12.

Compared to this, the comparative sample 9 produced in the same way as the example 1 of the present invention except the reflective layer including Al - Ti (Al being the measure component) suffered much jitters at 4 x and x 6 speed.

The difference in modulated amplitude between the embodiment and the comparative sample 9 is based on the following reason:
The element Ag, included in the reflective layer, exhibiting an optical constant (complex refractive index n - ik, "n" and "k" being refractive index and extinction coefficient, respectively) having a small real part allows high calorie of heat immersed into the recording layer to give high modulated amplitude. In contrast, the element Al, included in the reflective layer, exhibiting an optical constant having a larger real part than that of Ag allows low calorie of heat immersed into the recording layer to give low modulated amplitude, thus causing much jitters.

As discussed above, the optical storage medium according to the present invention having the first protective layer, the recording layer, the second protective layer and the reflective layer laminated in this order and employing Ag as the major component of the reflective layer, has several advantages on the recording layer as discussed above, and further has another advantage such that the reflective layer causes less jitters at 1 x to 3 x speed and also 4 x and x 6 speed.

The several examples of the present invention and the comparative samples were evaluated with the 2T-recording strategy shown in FIG. 2.

An example equivalent to the example 2 of the present invention was further evaluated with a known recording strategy shown in FIG. 7. In detail, recording was conducted on the example 2 at 4 x speed with a recording power Pw = 20 mW, an erasing power Pe = 9. 0 mW, top pulse Tₜₒₚ = 0. 40 [T], multi pulse Tₘₚ = 0. 20 [T] and cooling pulse T_{c1} = 1. 00 [T], the other strategies being the same as for the sample 1.

This sample evaluated under the known recording strategy exhibited feasible characteristics such as 8. 2 % in jitters and 64 % in modulated amplitude. It is revealed that the optical disk according to the present invention exhibits feasible characteristics not only under the 2T-recording strategy shown in FIG. 2.

As disclosed in detail, the present invention offers the phase-change optical disk that exhibits feasible recording characteristics in high linear velocity recording at, such as, 4 x to 6 x DVD speed. In particular, the phase-change optical disk according to the present invention exhibits feasible recording characteristics after multiple numbers of overwriting, thus preferable for long storage.

## Claims

1. An optical disk for use in recording at a high linear velocity of x 4 DVD speed or higher:
a substrate (1);
a first protective layer (2) formed on the substrate (1);
a recording layer (3) formed on the first protective layer (2);
a second protective layer (4) formed on the recording layer (3); and
a reflective layer (5) formed on the second protective layer (4),
wherein the recording layer (3) includes a composition expressed as (SbₓTe₁₋ₓ)ₐGe_{b}Inc in which atomic ratios are 0.77 ≤ x ≤ 0.84, 0.85 ≤ a ≤ 0.95, 0.01 ≤ b ≤ 0.10 and 0.01 ≤ c ≤ 0.10 where a + b + c =1, **characterised in that** the substrate has a spiral groove or concentric grooves with a depth dg of 20 nm ≤ d_{g} ≤ 30nm.

2. The optical disk according to claim 1, wherein the atomic ratios "b" of Ge and "c" of In have a difference - 0.05 ≤ b-c ≤ 0.05.

3. The optical disk according to claim 1, wherein the recording layer (3) includes at least one element selected from the group consisting of Ag, Si, Al, Ti, Bi and Ga, the selected element having 3 atom % or less in the recording layer (3).

4. The optical disk according to claim 1, wherein the reflective layer (5) includes Ag as a major component of the reflective layer (5).

## Patentansprüche

1. Optische Scheibe zur Verwendung bei einer Aufzeichnung mit einer hohen Lineargeschwindigkeit, dem 4-fachen der DVD-Geschwindigkeit oder höher, umfassend:
ein Substrat (1);
eine erste Schutzschicht (2), die auf dem Substrat (1) ausgebildet ist;
eine Aufzeichnungsschicht (3), die auf der ersten Schutzschicht (2) ausgebildet ist;
eine zweite Schutzschicht (4), die auf der Aufzeichnungsschicht (3) ausgebildet ist; und
eine reflektierende Schicht (5), die auf der zweiten Schutzschicht (4) ausgebildet ist,
wobei die Aufzeichnungsschicht (3) eine Zusammensetzung aufweist, die als (SbₓTe₁₋ₓ)ₐGe_{b}In_{c} ausgedrückt wird, in welcher die Atomanteile 0,77 ≤ x ≤ 0,84; 0,85 ≤ a ≤ 0,95; 0,01 ≤ b ≤ 0,10 und 0,01 ≤ c ≤ 0,10 betragen, wobei a + b + c = 1 gilt,
**dadurch gekennzeichnet, dass**
das Substrat eine spiralförmige Rille oder konzentrische Rillen mit einer Tiefe d_{g} von 20 nm ≤ d_{g} ≤ 30 nm aufweist.

2. Optische Scheibe nach Anspruch 1, bei welcher die Atomanteile "b" von Ge und "c" von In eine Differenz von -0,05 ≤ b-c ≤ 0,05 aufweisen.

3. Optische Scheibe nach Anspruch 1, bei welcher die Aufzeichnungsschicht (3) zumindest ein ausgewähltes Element aus der Gruppe enthält, die aus Ag, Si, Al, Ti, Bi und Ga besteht, wobei das ausgewählte Element mit 3 Atom-% oder weniger in der Aufzeichnungsschicht (3) vorhanden ist.

4. Optische Scheibe nach Anspruch 1, bei welcher die reflektierende Schicht (5) Ag als einen Hauptbestandteil der reflektierenden Schicht (5) enthält.

## Revendications

1. Disque optique destiné à être utilisé pour,un enregistrement à une vitesse linéaire élevée de DVD de x 4 ou plus, comprenant :
■ un substrat (1);
■ une première couche de protection (2) formée sur le substrat (1);
■ une couche d'enregistrement (3) formée sur la première couche de protection (2) ;
■ une seconde couche de protection (4) formée sur la couche d'enregistrement (3) ; et
■ une couche réfléchissante (5) formée sur la seconde couche de protection (4),
■ dans lequel la couche d'enregistrement (3) comprend une composition exprimée par (SbₓTe₁₋ₓ)ₐGe_{b} In_{c} dans laquelle les rapports atomiques sont de 0,77 ≤ x ≤ 0,84, 0,85 ≤ a ≤ 0,95, 0,01 ≤ b ≤ 0,10' et, 0,01 ≤ c ≤ 0,10, où a + b + c = 1, **caractériséen ce que** le substrat possède une rainure en spirale ou des rainures concentriques ayant une profondeur dg de 20 nm ≤ d_{g} ≤ 30 nm.

2. Disque optique selon la revendication 1, dans lequel les rapports atomiques "b" de Ge et "c" de In possèdent une différence de -0,05 ≤ b^{t}-c⁽³⁾≤ 0,05.

3. Disque optique selon la revendication 1, dans lequel la couche d'enregistrement (3) comprend au moins un élément choisi parmi le groupe consistant en Ag, Si, A1, Ti, Bi et Ga, l'élément sélectionné ayant 3% en atomes ou moins dans la couche d'enregistrement (3).

4. Disque optique selon la revendication 1, dans lequel la couche réfléchissante (5) comprend du Ag en tant que composant majeur de la couche réfléchissante (5).
